# EUROPEAN PATENT SPECIFICATION

(11) **EP 2 730 489 B1**
(45) Date of publication and mention of the grant of the patent: **23.03.2016**
(21) Application number: 13192193.4
(22) Date of filing: 08.11.2013
(51) Int. Cl.: B62K 11/10, B62K 19/02

(54) **Motorcycle frame**
Motorradrahmen
Cadre de motocyclette

(30) Priority: 13.11.2012 TW 101142198
(43) Date of publication of application: 14.05.2014
(73) Proprietor: Kwang Yang Motor Co., Ltd., Kaohsiung City 80794 (TW)
(72) Inventor: Ko, Shih-Chih, 84258 Kaohsiung City (TW)
(74) Representative: Fleuchaus, Michael A.

(56) References cited:
- CN-U- 201 694 319
- TW-B- I 274 695

## Description

The present invention relates to a motorcycle frame, more particularly to a motorcycle frame provided with a relatively large receiving space.

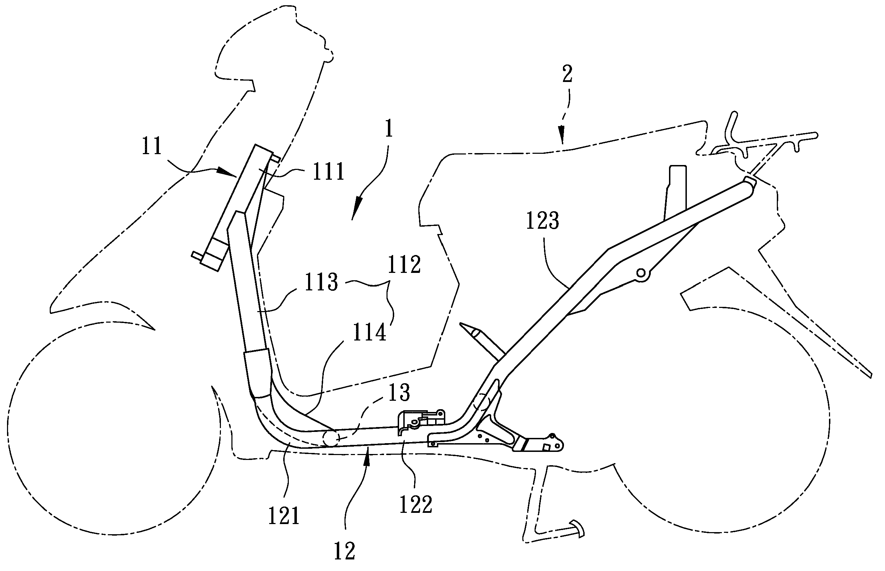

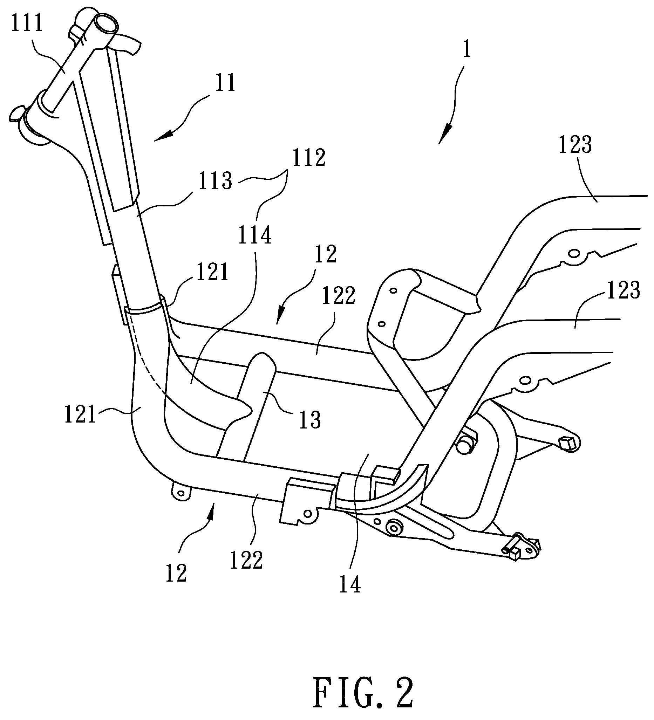

Referring to Figures 1 and 2, a conventional motorcycle frame 1 of a scooter-type motorcycle 2 disclosed in Taiwanese Patent Publication No. I274695 includes a main pipe unit 11, apairof side frame members 12, and a cross bar 13. The main pipe unit 11 includes a head tube 111 and a head tube support pipe 112 that is connected to the head tube 111. The head tube support pipe 112 has an upper part 113 that is connected to and extends downwardly and rearward from the head tube 111, and a lower part 114 that extends downwardly and rearward from the upper part 113.

The side frame members 12 are spaced apart from each other and are respectively disposed at left and right sides of the head tube support pipe 112. Each of the side frame members 12 has a front segment 121 that is bent, a horizontal segment 122 that is connected to and extends rearward from the front segment 121, and a rear segment 123 that extends rearward and upwardly from the horizontal segment 122. The front segments 121 have top ends welded to an outer surface of the upper part 113 of the head tube support pipe 112, and bottom ends extending away from each other.

The cross bar 13 is connected to a bottom end of the lower part 114 of the head tube support pipe 112 and extends transversely between the horizontal segments 122 of the side frame members 12 to interconnect the same. The horizontal segments 122 of the side frame members 12 and the cross bar 13 cooperatively bound a receiving space 14 to receive an oil tank (not shown) .

In order to possess high strength, each of the side frame members 12 is formed from a one-piece pipe bent to form the front, horizontal and rear segments 121, 122, 123. To provide a smooth bent curve, the curvature radii at the bent part of each side frame member 12 should not be too small. However, a large curvature radius can increase the size of the bent part. Hence, the space occupied by the bent part inside a motorcycle casing is increased, thereby limiting the size of the space formountingmotorcycle components, suchas the oil tank, an engine, etc. For mounting the oil tank, because a substantial space inside the motorcycle casing is occupied by the bent parts of the side frame members 12, the size of the oil tank has to be decreased, thereby reducing the capacity of the oil tank. In addition, since the lower part 114 of the head tube support pipe 112 extends downwardly to a footrest region of the motorcycle 2, it interferes with the space between the side frame members 12 so that the size of the receiving space 14 formed between the side frame members 12 becomes limited.

Referring to Figure 3, another motorcycle frame 3 disclosed in Taiwanese Patent Publication No. 1274695 includes a head tube supporting pipe (B) extending downwardly from a head tube (A) to a cross bar (C) that interconnects bent sections (D) of two side frame members (E). Compared with the conventional motorcycle frame 1, the motorcycle frame 3 has a larger receiving space (F) bounded by the cross bar (C) and the side frame members (E). However, because the cross bar (C) is disposed between the bent parts of the side frame members (E), the size of the receiving space (F) is still limited. On the other hand, because the head tube supporting pipe (B) has a relatively long length and is used sorely as a support structure in a front part of the motorcycle frame 3, the motorcycle frame 3 is prone to vibration during a driving operation.

CN 201 694 319 U, on which the preamble of claim 1 is based, relates to a motorcycle frame especially with regard to having a low-mounted pedals scooter type motorcycle frame structure.

Therefore, an object of the present invention is to provide a motorcycle frame that has a relatively large receiving space and that may alleviate the aforesaid drawbacks of the prior art.

According to the present invention, a motorcycle frame according to claim 1 is provided.

Other features and advantages of the present invention will become apparent in the following detailed description of the preferred embodiments with reference to the accompanying drawings, of which:
Figure 1 is a side view illustrating a conventional motorcycle frame disclosed in Taiwanese Patent Publication No. I274695;
Figure 2 is a perspective view of the conventional motorcycle frame of Figure 1;
Figure 3 is a perspective view of another motorcycle frame disclosed in Taiwanese Patent Publication No. I274695;
Figure 4 is a perspective view of the first preferred embodiment of a motorcycle frame according to the present invention;
Figure 5 is a side view of the first preferred embodiment;
Figure 6 is an enlarged fragmentary sectional view illustrating a head tube-supporting pipe of the first preferred embodiment;
Figure 7 is a perspective view illustrating the second preferred embodiment of a motorcycle frame according to the present invention; and
Figure 8 is a perspective view illustrating the third preferred embodiment of a motorcycle frame according to the present invention.

Before the present invention is described in greater detail, it should be noted that like elements are denoted by the same reference numerals throughout the disclosure.

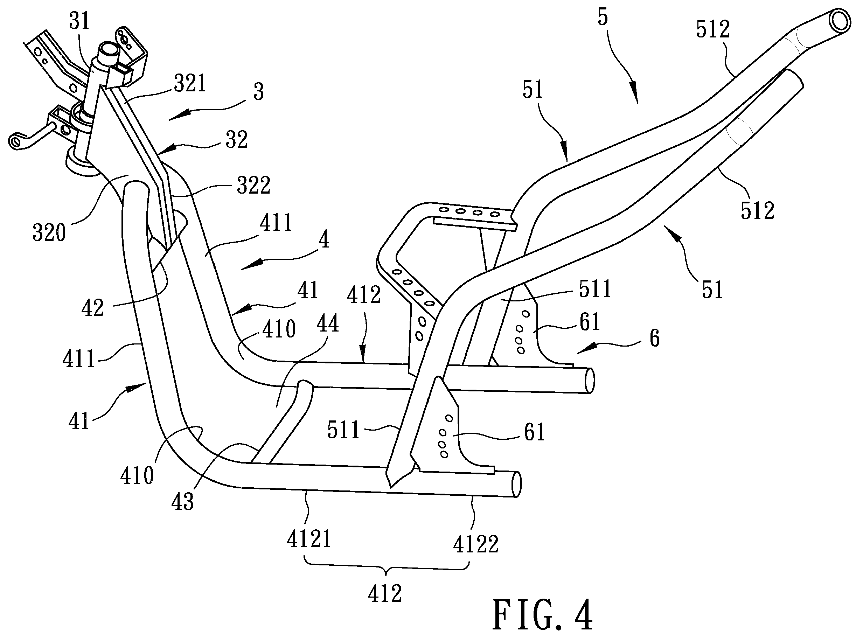

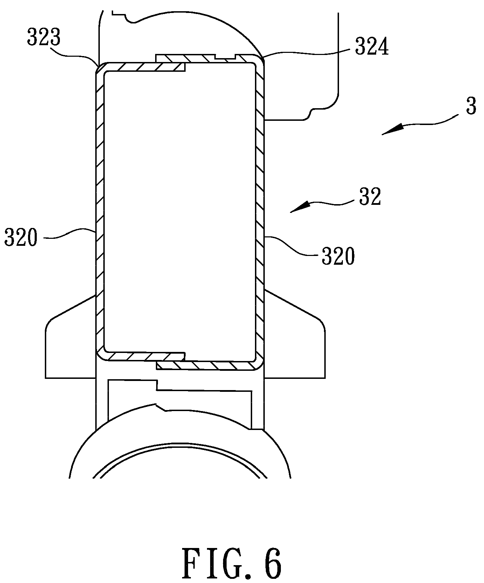

Referring to Figures 4, 5 and 6, the first preferred embodiment of a motorcycle frame according to the present invention is adapted to be covered by a motorcycle casing 92 with a footrest portion 921 and is shown to include a main pipe unit 3, a front side frame unit 4, a rear side frame unit 5, and a reinforcement unit 6.

The main pipe unit 3 includes a head tube 31 and a head tube-supporting pipe 32. The head tube-supporting pipe 32 has a top end portion 321 that is connected to the head tube 31, and a bottom end portion 322 that extends downwardly from the top end portion 321. In this preferred embodiment, the head tube-supporting pipe 32 has a rectangular cross-section, and is composed of left and right pipe halves 323, 324 that are coupled together. Each of the left and right pipe halves 323, 324 has a welding surface 320. The welding surfaces 320 of the left and right pipe halves 323, 324 are planar and face leftward and rightward, respectively.

The front side frame unit 4 includes a pair of spaced apart front support pipes 41 that are connected to the head tube-supporting pipe 32. Preferably, the front support pipes 41 of the front side frame unit 4 are welded to the head tube-supporting pipe 32. Each of the front support pipes 41 has a downward section 411 that extends downwardly from the head tube-supporting pipe 32, a bottom section 412 that is adapted for extending into the footrest portion 921 of the motorcycle casing 92, and a bent section 410 that is connected between the downward section 411 and the bottom section 412. In this preferred embodiment, the downward sections 411 of the front support pipes 41 have ends that are respectively welded to the welding surfaces 320 of the left and right pipe halves 323, 324. In addition, the front side frame unit 4 further includes an upper cross tube 42 that is connected between the downward sections 411 of the front support pipes 41 and that is connected to the bottom end portion 322 of the head tube-supporting pipe 32, a lower cross tube 43 that is connected between the bottom sections 412 of the front support pipes 41, and a receiving space 44 that is bounded by the upper and lower cross tubes 42, 43, and by the bent sections 410 and the downward sections 411 of the front support pipes 41.

Preferably, the bottom section 412 of each of the front support pipes 41 is linear and horizontal and has a footrest part 4121 that is connected to the bent section 410, and a rear part 4122 that extends rearward from the footrest part 4121. The lower cross tube 43 is disposed between the footrest parts 4121 of the front support pipes 41. In this preferred embodiment, the upper cross tube 42 is situated above the bent sections 410 and the footrest parts 4121 of the bottom sections 412 of the front support pipes 41, and above the footrest portion 921 of the motorcycle casing 92. The lower cross tube 43 is situated between the footrest parts 4121, beneath the footrest portion 921 of the motorcycle casing 92, and in front of the rear side frame unit 5. By virtue of the upper cross tube 42 being situated above the bent sections 410 and the footrest portion 921 of the motorcycle casing 92, the head tube-supporting pipe 32 does not extend to the footrest parts 4121 of the front support pipes 41 and thus is shortened compared to the prior art shown in Figures 1-3.

The rear side frame unit 5 includes a pair of rear support pipes 51 that are respectively connected to the bottom sections 412. Each of the rear support pipes 51 has an upward section 511 that is connected to and extends upwardly from the bottom section 412 of a respective one of the front support pipes 41, and an extension section 512 that extends upwardly and rearward from the upward section 511. In this preferred embodiment, the upward section 511 of each of the rear support pipes 51 is connected to a junction of the footrest part 4121 and the rear part 4122 of the respective one of the front support pipes 41.

The reinforcement unit 6 includes a pair of reinforcement members 61. Each of the reinforcement members 61 is disposed rearward of the upward section 511 of a respective one of the rear support pipes 51 and interconnects the upward section 511 of the respective one of the rear support pipes 51 and the rear part 4122 of the respective one of the front support pipes 41 through a welding process. Not only can the reinforcement members 61 reinforce rigidity of the motorcycle frame, but also is able to support an engine (not shown) . In the other words, the engine may be hung on the reinforcement members 61.

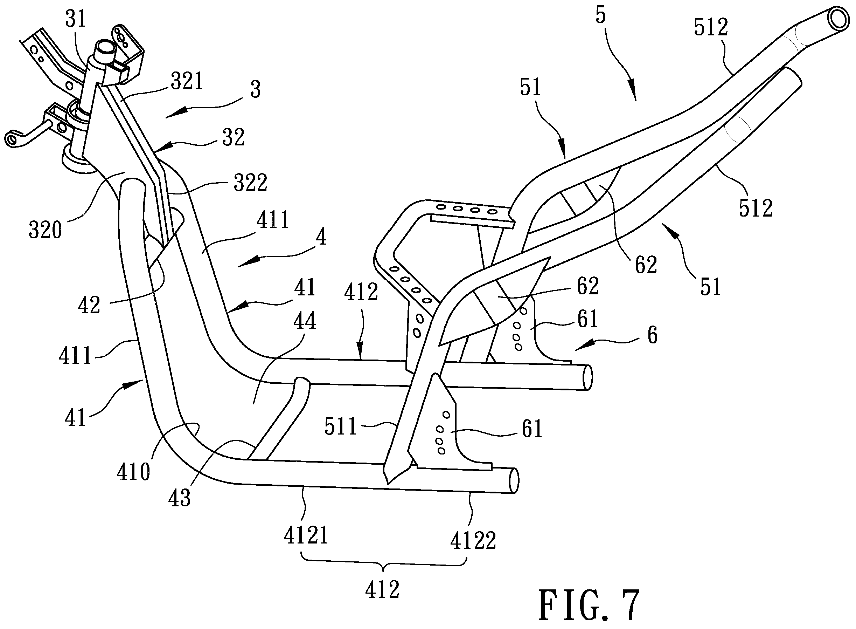

Referring to Figure 7, according to the second preferred embodiment of the present invention, the reinforcement unit 6 further includes a pair of hanging plates 62 that are adapted for hanging an engine of a motorcycle. Each of the hanging plates 62 is connected to the respective one of the rear support pipes 51 at a junction of the upward section 511 and the extension section 512 of the respective one of the rear support pipes 51. Similarly, the hanging plate 62 not only can strengthen rigidity of the motorcycle frame, but also is able to support an engine (not shown) of the motorcycle . Accordingly, the reinforcement members 61 or the hanging plate 62 not only reinforce the motorcycle frame of the present invention but also are useful for holding a hanging engine, or an underslug engine.

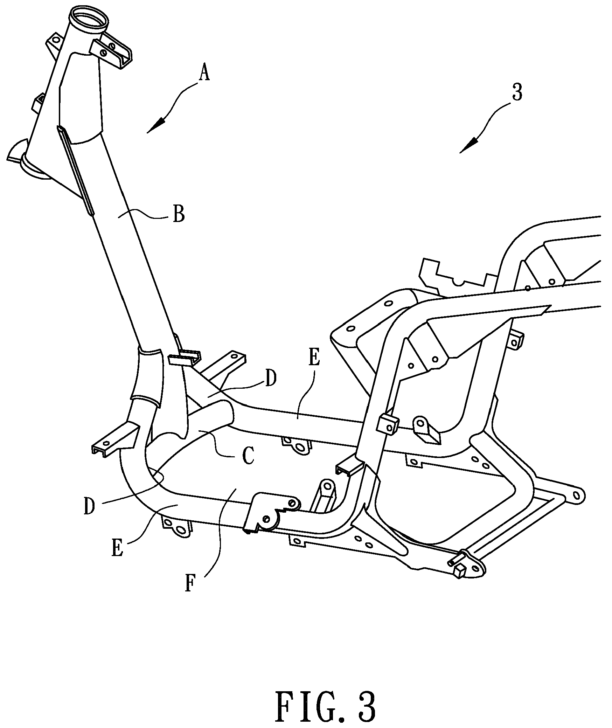

Since the front support pipes 41 of the front side frame unit 4 need to bear substantial forces, the front support pipes 41 have to be relatively thick in order to possess a relatively high structural rigidity. In the prior art shown in Figure 1 or 3, since each of the side frame members 12 is a one-piece bent pipe that extends from the front side to the rear side of the motorcycle frame, the bent pipe has to be entirely thick to provide structural rigidity, thereby increasing the amount of material required by each side frame member 12 and the overall weight of the motorcycle frame. On the contrary, in the present invention, because the upward sections 511 of the rear support pipes 51 are respectively welded to the bottom sections 412 of the front support pipes 41, the front support pipes 41 and the rear support pipes 51 can have different thicknesses, and the front support pipes 41 can be thicker so to be stronger. Since the rear support pipes 51 may have less strength and thickness, the overall weight of the motorcycle frame can be reduced in the present invention. Moreover, according to the present invention, the motorcycle frame can have a relatively lighter weight while still possessing high rigidity due to the use of the front and rear support pipes 41, 51, which are separate component parts that are welded together.

In addition, compared with the head tube-supporting pipe of the motorcycle frames in the prior art, the head tube-supporting pipe 32 is relatively short. The head tube-supporting pipe 32, the front support pipes 41 and the upper cross tube 42 constitute amulti-pipe structure at a front upper end portion of the motorcycle frame in the present invention. Therefore, the front upper end portion has a relatively bulky structure with high rigidity, which can reduce vibration of the motorcycle frame of the present invention. On the other hand, since the relatively short head tube-supporting pipe 32 does not interfere with the space between the front support pipes 41, the receiving space 44 formedbetween the front support pipes 41 can be relatively large and is bounded by the upper and lower cross tubes 42, 43, and by the front support pipes 41. Moreover, because the rear support pipes 51 are respectively welded to the front support pipes 41, the angle formed between each of the rear support pipes 51 and the respective one of the front support pipes 41 is not a bent angle formed by a bending process, which is rounded and which can create a rounded space that is unfavorable to contain objects. By virtue of the welding connection between each of the rear support pipes 51 and the respective one of the front support pipes 41, the bottom section 412 of each of the front support pipes 41 can have a relatively long utilizable length to form the receiving space 44 for containing objects, such as the oil tank, the motorcycle battery, or other components. Particularly, when the receiving space 44 is used to contain the oil tank, the capacity of the oil tank may be enlarged to increase the traveling mileage of the motorcycle.

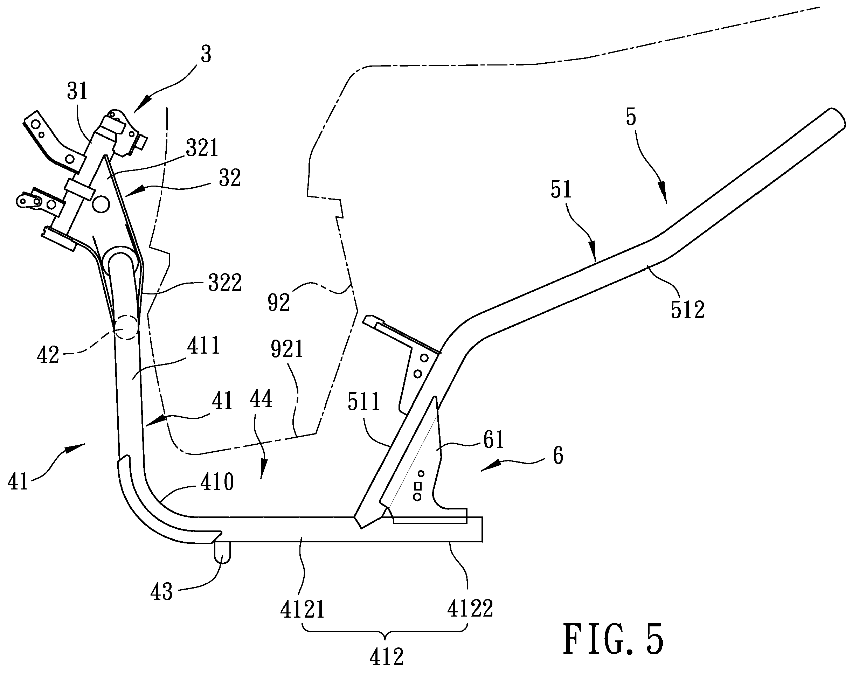

Referring back to Figures 3 and 5, since the head tube-supporting pipe 32 has the rectangular cross-section and since the welding surfaces 320 of the left and right pipe halves 323, 324 are planar, the front support pipes 41 of the front side frame unit 4 can be readily and firmly welded to the head tube-supporting pipe 32. Unlike the side frame members 12 of the prior art motorcycle frames, which have to be tailored to match with the rounded surface of the head tube support pipe 112, the front support pipes 41 of the front side frame unit 4 of the present invention need not be tailored for connection with the head tube-supporting pipe 32. In addition, because the rectangular head tube-supporting pipe 32 has a relatively large surface area for the welding connection, the present invention does not require a reinforcement plate which is welded additionally to the head tube support pipe 112 and the side frame members 12 in the prior art to reinforce the connection between the head tube support pipe 112 and the side frame members 12. The provision of the additionally welded reinforcement plate increases the amount of welded sites on the head tube support pipe 112 and the side frame members 12, which can result in significant stress concentration. Therefore, the rectangular cross-section of the head tube-supporting pipe 32 can facilitate the manufacturing and assembling processes of the motorcycle frame according to the present invention.

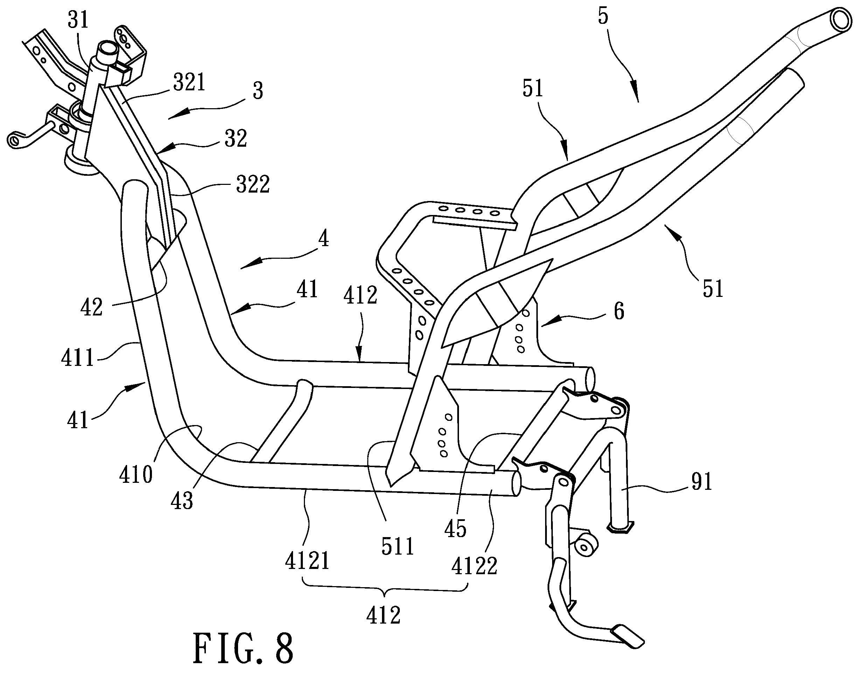

Figure 8 shows the third preferred embodiment of a motorcycle frame according to the present invention, which has a structure generally similar to that of the first preferred embodiment. However, in this preferred embodiment, the front side frame unit 4 further includes a rear cross tube 45 that interconnects the rear parts 4122 of the front support pipes 41. The rear cross tube 45 is adapted to be connected pivotally to a kickstand 91 of the motorcycle. The motorcycle frame according to the third preferred embodiment may be used in a heavy motorcycle. The kickstand 91 can be firmly connected to the motorcycle frame of the present invention by virtue of the rear cross tube 45.

While the front and rear support pipes 41, 51 are separate component parts in the first, second and third preferred embodiments, it is contemplated that the present invention may be implemented by forming each front support pipe 41 as one piece with the respective rear support pipe 51 as long as the upper cross tube 42 is disposed between the downward sections 411 and above the bent sections 410.

## Claims

1. A motorcycle frame, which is adapted to be covered by a motorcycle casing (92) with a footrest portion (921), said motorcycle frame comprising:
a main pipe unit (3) including a head tube (31) and a head tube-supporting pipe (32), said head tube-supporting pipe (32) having a top end portion (321) that is connected to said head tube (31), and a bottom end portion (322) that extends downwardly from said top end portion (321);
a front frame unit (4) including a pair of spaced apart front support pipes (41) that are connected to said head tube-supporting pipe (32), each of said front support pipes (41) having a downward section (411) that extends downwardly from said head tube-supporting pipe (32), a bottom section (412) adapted for extending in the footrest portion (921) of the motorcycle casing (92), and a bent section (410) connected between said downward section (411) and said bottom section (412), said front frame unit (4) further including an upper cross tube (42) that is connected between said downward sections (411) of said front support pipes (41) and that is connected to said bottom end portion (322) of said head tube-supporting pipe (32), and a lower cross tube (43) that is connected between said bottom sections (412) of said front support pipes (41),
said front frame unit (4) further including a receiving space (44) that is bounded by said upper and lower cross tubes (42, 43), and said bent sections (410) and said downward sections (411) of said front support pipes (41);
a rear frame unit (5) including a pair of rear support pipes (51) that are respectively connected to said bottom sections (412), each of said rear support pipes (51) having an upward section (511) that is connected to and extends upwardly from said bottom section (412) of a respective one of said front support pipes (41), and an extension section (512) that extends upwardly and rearward from said upward section (511); and
a reinforcement unit (6) including a pair of reinforcement members (61), each of said reinforcement members (61) being disposed rearward of said upward section (511) of a respective one of said rear support pipes (51) and interconnecting said upward section (511) of the respective one of said rear support pipes (51) and said bottom section (412) of the respective one of said front support pipes (41),
said motorcycle frame being **characterized in that**
said head tube-supporting pipe (32) has a rectangular cross-section, said head tube-supporting pipe (32) being composed of left and right pipe halves (323, 324) that are coupled together, each of said left and right pipe halves (323, 324) having a welding surface (320), said downward sections (411) of said front support pipes (41) being respectively welded to said left and right welding surfaces (320) of said left and right pipe halves (323, 324).

2. The motorcycle frame as claimed Claim 1, further **characterized in that** said bottom section (412) of each of said front support pipes (41) has a footrest part (4121) that is connected to said bent section (410), and a rear part (4122) that extends rearward from said footrest part (4121), said upward section (511) of each of said rear support pipes (51) being connected to a juncture of said footrest part (4121) and said rear part (4122) of the respective one of said front support pipes (41), said lower cross tube (43) being disposed between said footrest parts (4121) of said front support pipes (41), each of said reinforcement members (61) being connected to said rear part (4122) of the respective one of said front support pipes (41).

3. The motorcycle frame as claimed in Claim 1, **characterized in that** said upward sections (511) of said rear support pipes (51) are respectively welded to said bottom sections (412) of said front support pipes (41).

4. The motorcycle frame as claimed in Claim 1, **characterized in that** said reinforcement unit (6) further includes a pair of hanging plates (62) that are adapted for hanging an engine of a motorcycle, each of said hanging plate (62) being connected to the respective one of said rear support pipes (51) at a juncture of said upward section (511) and said extension section (512) of the respective one of said rear support pipes (51).

5. The motorcycle frame as claimed in Claim 2, **characterized in that** said front frame unit (4) further includes a rear cross tube (45) that interconnects said rear parts (4122) of said front support pipes (41), said rear cross tube (45) being adapted to connect pivotably a kickstand (91) of a motorcycle.

## Patentansprüche

1. Motorradrahmen, der dazu angepasst ist, durch eine Motorradverkleidung(92) mit einem Fußstützabschnitt (921) abgedeckt zu sein, wobei der Motorradrahmen umfasst:
eine Hauptrohreinheit (3), die ein Kopfrohr (31) und ein Kopfrohr-Stützrohr (32) aufweist, wobei das Kopfrohr-Stützrohr (32) einen oberen Endabschnitt (321), der mit dem Kopfrohr (31) verbunden ist, und einen unteren Endabschnitt (322), der sich von dem oberen Endabschnitt (321) abwärts erstreckt, hat;
eine vordere Rahmeneinheit (4), die ein Paar beabstandete vordere Stützrohre (41) aufweist, die mit dem Kopfrohr-Stützrohr (32) verbunden sind, wobei jedes der vorderen Stützrohre (41) einen Abwärtsbereich (411), der sich von dem Kopfrohr-Stützrohr (32) abwärts erstreckt, einen Bodenbereich (412), der dazu angepasst ist, sich in dem Fußstützabschnitt (921) der Motorradverkleidung (92) zu erstrecken, und einen gebogenen Bereich (410), der zwischen dem Abwärtsbereich (411) und dem Bodenbereich (412) verbunden ist, hat, wobei die vordere Rahmeneinheit (4) weiterhin ein oberes Querrohr (42), das zwischen den Abwärtsbereichen (411) der vorderen Stützrohre (41) verbunden ist und das mit dem unteren Endabschnitt (322) des Kopfrohr-Stützrohrs (32) verbunden ist, und ein unteres Querrohr (43), das zwischen den Bodenbereichen (412) der vorderen Stützrohre (41) verbunden ist, aufweist, wobei die vordere Rahmeneinheit (4) weiterhin einen Aufnahmeraum (44) aufweist, der durch die oberen und unteren Querrohre (42, 43) und die gebogenen Bereiche (410) und die Abwärtsbereiche (411) der vorderen Stützrohre (41) begrenzt ist;
eine hintere Rahmeneinheit (5), die ein Paar hintere Stützrohre (51) aufweist, die jeweils mit den Bodenbereichen (412) verbunden sind, wobei jedes der hinteren Stützrohre (51) einen Aufwärtsbereich (511), der mit dem Bodenbereich (412) eines jeweiligen der vorderen Stützrohre (41) verbunden ist und sich von demselben aufwärts erstreckt, und einen Verlängerungsbereich (512), der sich von dem Aufwärtsbereich (511) aufwärts und rückwärts erstreckt, hat; und
eine Verstärkungseinheit (6), die ein Paar Verstärkungsglieder (61) aufweist, wobei Jedes der Verstärkungsglieder (61) rückwärtig zu dem Aufwärtsbereich (511) eines jeweiligen der hinteren Stützrohre (51) angeordnet ist und den Aufwärtsbereich (511) des Jeweiligen der hinteren Stützrohre (51) und den Bodenbereich (412) des jewelligen der vorderen Stützrohre (41) miteinander verbindet,
wobei der Motorradrahmen **dadurch gekennzeichnet ist, dass**
das Kopfrohr-Stützrohr (32) einen rechteckigen Querschnitt hat, wobei das Kopfrohr-Stützrohr (32) aus linken und rechten Rohrhälften (323, 324) zusammengesetzt ist, die aneinandergekoppelt sind, wobei jede der linken und rechten Rohrhälften (323, 324) eine Schweißfläche (320) hat, wobei die Abwärtsbereiche (411) der vorderen Stützrohre (41) jeweils an die linken und rechten Schweißflächen (320) der linken und rechten Rohrhälften (323,324) geschweißt sind.

2. Motorradrahmen gemäß Anspruch 1, weiterhin **dadurch gekennzeichnet, dass** der Bodenbereich (412) eines jeden der vorderen Stützrohre (41) einen Fußstützteil (4121), der mit dem gebogenen Bereich (410) verbunden ist, und einen hinteren Teil (4122), der sich von dem Fußstützteil (4121) rückwärts erstreckt, hat, wobei der Aufwärtsbereich (511) eines jeden der hinteren Stützrohre (51) mit einer Verbindungsstelle des Fußstützteils (4121) und des hinteren Teils (4122) des jeweiligen der vorderen Stützrohre (41) verbunden ist, wobei das untere Querrohr (43) zwischen den Fußstützteilen (4121) dervorderen Stützrohre (41) angeordnet ist, wobei jedes der Verstärkungsglieder (61) mit dem hinteren Teil (4122) des jeweiligen der vorderen Stützrohre (41) verbunden ist.

3. Motorradrahmen gemäß Anspruch 1, **dadurch gekennzeichnet, dass** die Aufwärtsbereiche (511) der hinteren Stützrohre (51) Jeweils an die Bodenbereiche (412) dervorderen Stützrohre (41) geschweißt sind.

4. Motorradrahmen gemäß Anspruch 1, **dadurch gekennzeichnet, dass** die Verstärkungseinheit (6) weiterhin ein PaarAufhängungsplatten (62) aufweist, die zum Aufhängen eines Motors eines Motorrads angepasst sind, wobei jede der Aufhängungsplatten (62) mit dem jeweiligen der hinteren Stützrohre (51) an einer Verbindungsstelle des Aufwärtsbereiches (511) und des Verlängerungsbereiches (512) des jeweiligen der hinteren Stützrohre (51) verbunden ist.

5. Motorradrahmen gemäß Anspruch 2, **dadurch gekennzeichnet, dass** die vordere Rahmeneinheit (4) weiterhin ein hinteres Querrohr (45) aufweist, das die hinteren Teile (4122) der vorderen Stützrohre (41) miteinander verbindet, wobei das hintere Querrohr (45) zur schwenkbaren Verbindungeines Ständers (91) eines Motorrads angepasst ist.

## Revendications

1. Cadre de motocyclette qui est adapté pour être couvert par un carter de motocyclette (92) avec une partie repose-pieds (921), ledit carter de motocyclette comprenant :
une unité principale à tuyaux (3) comportant un tube d'en-tête (31) et un tuyau de support du tube d'en-tête (32), ledit tuyau de support du tube d'en-tête (32) possédant une partie d'extrémité supérieure (321) qui est connectée audit tube d'en-tête (31), et une partie d'extrémité inférieure (322) qui s'étend vers le bas à partir de ladite partie d'extrémité supérieure (321) ;
une unité de cadre avant (4) comportant une paire de tuyaux de support avant espacés séparément (41) qui sont connectés audit tuyau de support du tube d'en-tête (32), chacun desdits tuyaux de support avant (41) possédant une section vers le bas (411) qui s'étend vers le bas à partir dudit tuyau de support du tube d'en-tête (32), une section inférieure (412) adaptée pour s'étendre dans la partie repose-pieds (921) du carter de motocyclette (92), et une section coudée (410) connectée entre ladite section vers le bas (411) et ladite section inférieure (412), ladite unité de cadre avant (4) comportant par ailleurs un tube transversal supérieur (42) qui est connecté entre lesdites sections vers le bas (411) desdits tuyaux de support avant (41) et qui est connecté à ladite partie d'extrémité inférieure (322) dudit tuyau de support du tube d'en-tête (32), et un tube transversal inférieur (43) qui est connecté entre lesdites sections inférieures (412) desdits tuyaux de support avant (41), ladite unité de cadre avant (4) comportant par ailleurs un espace de réception (44) qui est limite par lesdits tubes transversaux supérieurs et inférieurs (42, 43), et lesdites sections coudées (410) et lesdites sections vers le bas (411) desdits tuyaux de support avant (41) ;
une unité de cadre arrière (5) comportant une paire de tuyaux de support arrière (51) qui sont connectés respectivement auxdites sections inférieures (412), chacun desdits tuyaux de support arrière (51) possédant une section vers le haut (511) qui est connectée à et s'étend vers le haut à partir de ladite section inférieure (412) d'un respectif desdits tuyaux de support avant (41), et une section d'extension (512) qui s'étend vers le haut et vers l'arrière à partir de ladite section vers le haut (511) ; et
une unité de renforcement (6) comportant une paire d'éléments de renforcement (61), chacun desdits éléments de renforcement (61) étant disposé vers l'arrière de ladite section vers le haut (511) d'un respectif desdits tuyaux de support arrière (51) et interconnectant ladite section vers le haut (511) de celui respectif desdits tuyaux de support arrière (51) et ladite section supérieure (412) de celui respectif desdits tuyaux de support avant (41),
ledit cadre de motocyclette étant **caractérisé en ce que**
ledit tuyau de support du tube d'en-tête (32) possède une section transversale rectangulaire, ledit tuyau de support du tube d'en-tête (32) étant composé de moitiés de tuyau gauche et droite (323, 324) qui sont accouplées ensemble, chacune desdites moitiés de tuyau gauche et droite (323, 324) possédant une surface de soudure (320), lesdites sections vers le bas (411) desdits tuyaux de support avant (41) étant soudées respectivement auxdites surfaces de soudure gauche et droite (320) desdites moitiés de tuyau gauche et droite (323, 324).

2. Cadre de motocyclette tel que revendiqué dans la revendication 1, **caractérisé par** ailleurs en ce que ladite section supérieure (412) de chacun desdits tuyaux de support avant (41) possède une partie repose-pieds (4121) qui est connectée à ladite section coudée (410), et une partie arrière (4122) qui s'étend vers l'arrière à partir de ladite partie repose-pieds (4121), ladite section vers le haut (511) de chacun desdits tuyaux de support arrière (51) étant connectés à une jonction de ladite partie repose-pieds (4121) et ladite partie arrière (4122) de celui respectif desdits tuyaux de support avant (41), ledit tube transversal inférieur (43) étant disposé entre lesdites parties repose-pieds (4121) desdits tuyaux de support avant (41), chacun desdits éléments de renforcement (61) étant connecté à ladite partie arrière (4122) de celui respectif desdits tuyaux de support avant (41).

3. Cadre de motocyclette tel que revendiqué dans la revendication 1, **caractérisé en ce que** lesdites sections vers le haut (511) desdits tuyaux de support arrière (51) sont respectivement soudées auxdites sections supérieures (412) desdits tuyaux de support avant (41).

4. Cadre de motocyclette tel que revendiqué dans la revendication 1, **caractérisé en ce que** ladite unité de renforcement (6) comporte par ailleurs une paire de plaques de suspension (62) qui sont adaptées pour la suspension d'un moteur d'une motocyclette, chacune desdites plaques de suspension (62) étant connectée à celui respectif des tuyaux de support arrière (51) à une jonction de ladite section vers le haut (511) et de ladite section d'extension (512) de celui respectif desdits tuyaux de support arrière (51).

5. Cadre de motocyclette tel que revendiqué dans la revendication 2, **caractérisé en ce que** ladite unité de cadre avant (4) comporte par ailleurs un tube transversal arrière (45) qui interconnecte lesdites parties arrière (4122) desdits tuyaux de support avant (41), ledit tube transversal arrière (45) étant adapté pour connecter de manière pivotante une béquille (91) d'une motocyclette.
